(19) Europäisches Patentamt
European Patent Office
Office européen des brevets

(11) Veröffentlichungsnummer : **0 118 821**
**B1**

(12) # EUROPÄISCHE PATENTSCHRIFT

(45) Veröffentlichungstag der Patentschrift : **07.09.88**

(21) Anmeldenummer : **84102015.9**

(22) Anmeldetag : **27.02.84**

(51) Int. Cl.[4] : **C 08 G 18/32**, C 08 G 18/38, C 08 G 18/10, C 09 D 3/72, C 09 K 3/10

(54) **Verfahren zur Herstellung von Kombinationen aus organischen Polyisocyanaten und zumindest teilweise blockierten Polyaminen, die nach dem Verfahren erhältlichen Kombinationen und ihre Verwendung zur Herstellung von Lacken, Beschichtungs- oder Dichtungsmassen.**

(30) Priorität : **09.03.83 DE 3308418**

(43) Veröffentlichungstag der Anmeldung : **19.09.84 Patentblatt 84/38**

(45) Bekanntmachung des Hinweises auf die Patenterteilung : **07.09.88 Patentblatt 88/36**

(84) Benannte Vertragsstaaten : **DE FR GB IT NL**

(56) Entgegenhaltungen :
**EP-A- 0 003 569**
**US-A- 2 498 419**
**US-A- 2 912 414**
**US-A- 3 420 800**

(73) Patentinhaber : **BAYER AG**
**Konzernverwaltung RP Patentabteilung**
**D-5090 Leverkusen 1 Bayerwerk (DE)**

(72) Erfinder : **Nachtkamp, Klaus, Dr.**
**Leuchterstrasse 112**
**D-5000 Köln 80 (DE)**
Erfinder : **Bock, Manfred, Dr.**
**Haydnstrasse 18**
**D-5090 Leverkusen (DE)**
Erfinder : **Halpaap, Reinhard, Dr.**
**Kleinfeldchenweg 37b**
**D-5000 Köln 91 (DE)**
Erfinder : **Pedain, Josef, Dr.**
**Haferkamp 6**
**D-5000 Köln 80 (DE)**

**EP 0 118 821 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein neues Verfahren zur Herstellung von wasserhärtbaren, als Gemisch aus (i) und (ii) und gegebenenfalls als Harnstoffgruppen aufweisende Umsetzungsprodukte aus (i) und (ii) vorliegenden Kombinationen von organischen Polyisocyanaten (i) und Ketimin-blockierte, primäre Aminogruppen aufweisenden Polyaminen (ii), die nach diesem Verfahren erhältlichen Kombinationen und ihre Verwendung zur Herstellung von wasserhärtbaren Lacken, Beschichtungs- oder Dichtungsmassen.

Polyurethan-Beschichtungsmittel aus Polyisocyanaten und blockierten Polyaminen sind bekannt. So werden z. B. in DE-B 1 520 139 wasserhärtbare Gemische aus organischen Polyisocyanaten, insbesondere endständige Isocyanatgruppen aufweisenden Vorpolymeren, und sich von Polyaminen ableitenden Polyaldiminen oder Polyketiminen beschrieben.

Obwohl in den Beispielen der DE-B 1 520 139 von destillierten, nahezu analysenreinen Polyaldiminen bzw. Polyketiminen ausgegangen wird, weisen einige der dort beschriebenen Gemische eine nur beschränkte Lagerstabilität auf. Dies ist technisch von Nachteil, denn die Gemische sollten selbstverständlich vor ihrer Applikation, z. B. bei der Herstellung von Oberflächenbelägen, möglichst lange flüssig und somit verarbeitbar bleiben. Die Lagerstabilität der beschriebenen Gemische bzw. die « Topfzeit » der daraus hergestellten Beschichtungsmassen wird dadurch beschränkt, daß die beschriebenen Imine, insbesondere die Ketimine, auch in Abwesenheit von Wasser und bei niedrigen Temperaturen mit meßbarer Geschwindigkeit mit Isocyanatgruppen reagieren. Kurze Topfzeiten von nur wenigen Stunden sind auch ein Merkmal der in US-A 4 009 307 beschriebenen Beschichtungsmassen, die spezielle Isocyanat-terminierte Polyurethan-Prepolymere im Gemisch mit speziellen Polyketimin-Materialien enthalten.

Zur Vermeidung der Nachteile, die mit den kurzen Topfzeiten verbunden sind, werden in DE-B 1 520 139 vorzugsweise « sterisch gehinderte » Polyaldimine oder Polyketimine verwendet, die im Gemisch mit Polyisocyanaten eine verbesserte Lagerbeständigkeit aufweisen. Als « sterisch gehinderte » Imine werden in der genannten Druckschrift solche verstanden, die sich von Aldehyden oder Ketonen und Polyaminen ableiten, bei denen die Carbonylgruppe und/oder mindestens eine Aminogruppe direkt an ein tert. Kohlenstoffatom gebunden sind. Darüber hinaus wird gemäß DE-B 1 520 139 der Einsatz von Aldiminen dem von Ketiminen vorgezogen, da Aldimine prinzipiell eine geringere Tendenz besitzen, in Abwesenheit von Wasser mit Isocyanaten zu reagieren.

Beide in DE-B 1 520 139 vorgeschlagenen Maßnahmen zur Verbesserung der Lagerstabilität der Isocyanat-Imin-Gemische sind jedoch mit Nachteilen behaftet. Der Einsatz der « sterisch gehinderten » Polyaldimine oder Polyketimine bedeutet einen erhöhten technischen Aufwand, da zur Synthese dieser Imine nicht von den in der Polyurethanchemie allgemein verwendeten einfachen Polyaminen und/oder nicht von gängigen und preiswerten Aldehyden bzw. Ketonen ausgegangen werden kann, sondern speziell aufgebaute und damit teurere Ausgangsverbindungen eingesetzt werden müssen. Ein weiterer Nachteil des Einsatzes der « sterisch gehinderten » Polyaldimine oder Polyketimine ist, daß ihre Reaktivität gegenüber Isocyanaten nicht nur in Abwesenheit von Wasser, sondern auch bei Wasserzutritt verringert ist. Wie Vergleichsversuche zeigten, härten Beschichtungen auf der Basis solcher « sterisch gehinderter » Imine deutlich langsamer aus als entsprechende Beschichtungen, die Imine aus nicht « sterisch gehinderten » Ausgangsprodukten enthalten.

Die Bevorzugung von Aldiminen gegenüber Ketiminen ist darüber hinaus insofern nachteilig, als bei der Feuchtigkeitshärtung von Polyisocyanat-Polyaldimin-Gemischen Aldehyde freigesetzt werden. Diese besitzen, wenn sie, wie in DE-B 1 520 139 bevorzugt, einen niedrigen Siedepunkt aufweisen, allgemein einen stärkeren und störenderen Geruch als die aus Ketiminen freigesetzten Ketone. Der leztgenannte Nachteil haftet auch den in US-A 3 932 357 (DE-A 2 325 824) beschriebenen Beschichtungsmitteln an, da diese ausschließlich auf Aldiminen, bevorzugt auf Isobutyraldiminen, basieren, was aufgrund des unangenehmen Geruchs des freiwerdenden Isobutyraldehyds besonders nachteilig ist.

Es war daher die der Erfindung zugrundeliegende Aufgabe, neue, wasserhärtbare Kombinationen aus organischen Polyisocyanaten und zumindest teilweise blockierten Polyaminen zur Verfügung zu stellen, die eine verbesserte Lagerstabilität aufweisen, ohne daß dabei die o.g. Nachteile in Kauf genommen werden müssen.

Diese Aufgabe konnte durch die Bereitstellung des nachstehend näher beschriebenen erfindungsgemäßen Verfahrens gelöst werden. Der Erfindung liegt die überraschende Beobachtung zugrunde, daß Polyketimin-Gemische, die neben « normalen » Ketimin-Gruppen der Struktur

$$-N=\overset{|}{C}-$$

auch einen bestimmten Anteil an Gruppen der Struktur

$$-N=\overset{|}{C}-\overset{|}{C}=C-$$

aufweisen, in Abwesenheit von Wasser mit Polyisocyanaten ähnlich langsam reagieren wie solche Polyketimine, die aus im Sinne der DE-B 1 520 139 « sterisch gehinderten » Aufbaukomponenten hergestellt wurden, und daß gleichzeitig Beschichtungsmittel, die die erfindungsgemäß geeigneten Polyketimin-Gemische in Kombination mit Polyisocyanaten enthalten, nach Applikation auf ein Substrat unter sonst vergleichbaren Bedingungen deutlich schneller aushärten als entsprechende Gemische, die Ketimine aus den « sterisch gehinderten » Aufbaukomponenten enthalten.

Ihre besondere Bedeutung erhält die Erfindung dadurch, daß die erfindungsgemäß geeigneten Polyketimin-Gemische direkt aus gängigen, nicht sterisch gehinderten Polyaminen und einfachen, nicht sterisch gehinderten Ketonen zugänglich sind. Die zu Schiff'schen Basen führenden Kondensationsreaktionen können nämlich durch Einhaltung bestimmter Reaktionsbedingungen so gelenkt werden, daß im Sinne der Aldol-Kondensation « höherkondensierte » Produkte mit funktionellen Gruppen der Struktur

$$-N=\overset{|}{C}-\overset{|}{C}=\overset{|}{C}-$$

entstehen. Umsetzungen dieser Art sind z. B. durch A. M. Paquin, Chem ; Ber. 82, 316 (1949) und US-A 2 498 419 bekannt geworden. Die gemäß vorliegender Erfindung geeigneten Polyamine und Ketone lassen sich nun in einer Weise miteinander umsetzen, daß Polyketimin-Gemische entstehen, in denen funktionelle Gruppen der Struktur

$$-N=\overset{|}{C}-$$

neben Gruppen der Struktur

$$-N=\overset{|}{C}-\overset{|}{C}=\overset{|}{C}-$$

in solchen Mengenverhältnissen enthalten sind, daß das entstandene rohe Reaktionsprodukt, gegebenenfalls nach Entfernung von Lösungsmitteln, direkt in erfindungsgemäßer Weise mit Polyisocyanaten kombiniert werden kann.

Gegenstand der vorliegenden Erfindung ist ein Verfahren zur Herstellung von wasserhärtbaren, im wesentlichen Gemische aus (i) und (ii) und gegebenenfalls Harnstoffgruppen aufweisende Umsetzungsprodukte aus (i) und (ii) darstellenden, gegebenenfalls aus der Lacktechnologie bekannte Hilfs- und Zusatzmittel (iii) enthaltenden, Kombinationen aus (i) organischen Polyisocyanaten und (ii) Polyaminen mit zumindest teilweise blockierten, als Ketimin vorliegenden Aminogruppen durch Vermischen der organischen Polyisocyanate (i) mit den Polyaminen (ii) und gegebenenfalls aus der Lacktechnologie bekannten Hilfs- und Zusatzmitteln (iii) unter Einhaltung eines Äquivalentverhältnisses von Isocyanatgruppen zu blockierten und freien Aminogruppen von 0,9 : 1 bis 4 : 1 und Umsetzung der gegebenenfalls vorliegenden freien Aminogruppen mit einem Teil der Isocyanatgruppen des Polyisocyanats (i) unter Harnstoffbildung, dadurch gekennzeichnet, daß man als Polyamine (ii) mit zumindest teilweise blockierten Aminogruppen Gemische, bestehend aus

a) 50 bis 95 Aminäquivalentprozent an organischen Verbindungen, die frei von primären und sekundären Aminogruppen sind und mindestens zwei Ketimingruppen der Formel

$$-N=\overset{R^1}{\overset{|}{C}}-CH_2-R^2$$

aufweisen, wobei $R^1$ für einen Alkyl- oder Cycloalkylrest und $R^2$ für Wasserstoff oder einen Alkyl- oder Cycloalkylrest steht, oder wobei $R^1$ und $R^2$ zusammen mit den beiden Kohlenstoffatomen der Ketimingruppe einen cycloaliphatischen Kohlenwasserstoffrest bilden,

b) 5 bis 40 Aminäquivalentprozent an organischen Verbindungen, die frei von primären und sekundären Aminogruppen sind und mindestens zwei Ketimingruppen aufweisen, von denen eine den Formeln

$$-N=\overset{R^1}{\overset{|}{C}}-\overset{R^2}{\overset{|}{C}}=\overset{R^1}{\overset{|}{C}}-CH_2-R^2 \quad \text{und / oder} \quad -N=\overset{R^1}{\overset{|}{C}}-\overset{R^2}{\overset{|}{C}}=\underset{R^1}{\underset{|}{C}}-CH_2-R^2$$

entspricht, wobei $R^1$ und $R^2$ die obengenannte Bedeutung haben, während die außerdem vorliegenden Ketimingruppe(n) der unter a) genannten Formel entsprechen,

c) 0 bis 15 Aminäquivalentprozent an organischen Verbindungen, die eine freie primäre oder sekundäre Aminogruppe und mindestens eine Ketimingruppe der unter a) genannten Formel aufweisen,

d) 0 bis 15 Aminäquivalentprozent an Ketimingruppenfreien organischen Verbindungen mit insgesamt mindestens zwei primären und/oder sekundären Aminogruppen und

e) 0 bis 5 Aminäquivalentprozent an anderen als den unter a) bis d) genannten organischen Verbindungen mit zumindest teilweise blockierten Aminogruppen,

wobei sich die genannten Prozentsätze zu 100 ergänzen, verwendet.

Gegenstand der Erfindung sind auch die nach diesen Verfahren erhältlichen, Gemische und gegebenenfalls Harnstoffgruppen aufweisende Umsetzungsprodukte darstellende, gegebenenfalls aus der Lacktechnologie bekannte Hilfs- und Zusatzmittel enthaltende Kombinationen aus organischen Polyisocyanaten und zumindest teilweise blockierten organischen Polyaminen.

Gegenstand der Erfindung ist auch die Verwendung der nach dem erfindungsgemäßen Verfahren erhältlichen, Gemische und gegebenenfalls Harnstoffgruppen aufweisende Umsetzungsprodukte darstellenden, und gegebenenfalls aus der Lacktechnologie bekannte Hilfs- und Zusatzmittel enthaltenden, Kombinationen aus organischen Polyisocyanaten und zumindest teilweise blockierten organischen Polyaminen als wasserhärtbare Lacke, Beschichtungs- oder Dichtungsmassen.

In den o.g. erfindungswesentlichen Ketiminkomponenten a), b) und c) ist das, in den genannten Formeln mit einer freien Valenz versehene, Ketimin-Stickstoffatom direkt mit dem, weitere Ketimingruppierungen und/oder Aminogruppen als Substituenten und gegebenenfalls (im Fall der Verwendung von zusätzlich sekundäre Aminogruppen als Brückenglieder aufweisenden Polyaminen) sekundäre Aminogruppen als Brückenglieder aufweisenden Kohlenwasserstoffgerüst des zur Herstellung der unter a) bis c) genannten organischen Verbindungen verwendeten Polyamins verknüpft.

Ausgangsmaterialien für das erfindungsgemäße Verfahren sind organische Polyisocyanate (i) inkl. den aus der Polyurethanchemie bekannten NCO-Prepolymeren und zumindest teilweise blockierte Polyamine (ii).

Die organischen Polyisocyanate (i) weisen ein (mittleres) Molekulargewicht von 140 bis 10 000 und vorzugsweise eine (mittlere) NCO-Funktionalität von 2 bis 4 auf.

Geeignete Polyisocyanate sind beispielsweise Verbindungen der Formel

$$Q(NCO)_n$$

in welcher

Q für einen aromatischen, gegebenenfalls Methylsubstituenten oder Methylenbrücken aufweisenden Kohlenwasserstoffrest mit insgesamt 6 bis 15 Kohlenstoffatomen, einen aliphatischen Kohlenwasserstoffrest mit 4 bis 18, vorzugsweise 6 bis 10 Kohlenstoffatomen, einen cycloaliphatischen Kohlenwasserstoffrest mit 6 bis 15 Kohlenstoffatomen oder einen Xylylenrest steht, und

n für eine ganze Zahl von 2 bis 4, vorzugsweise 2 bis 3, steht.

Typische Beispiele für derartige erfindungsgemäß geeignete Polyisocyanate sind Tetramethylendiisocyanat, Hexamethylendiisocyanat, 1,12-Dodecandiisocyanat, 1,18-Octadecan-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (IPDI), Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, 3,2'- und/oder 3,4'-Diisocyanato-4-methyl-diphenylmethan, Naphthylen-1,5-diisocyanat, Triphenylmethan-4,4', 4''-triisocyanat oder 2,2',4,4'-Tetraisocyanato-5,5'-dimethyl-triphenylmethan.

Ferner geeignet sind beispielsweise Polyphenylpolymethylen-polyisocyanate, wie sie durch Anilin-Formaldehyd-Kondensation und anschließende Phosgenierung erhalten und z. B. in den GB-A 874 430 und 848 671 beschrieben werden, Carbodiimidgruppen aufweisende Polyisocyanate, wie sie in der DE-B 1 092 007 beschrieben werden, Allophanatgruppen aufweisende Polyisocyanate, wie sie z. B. in der GB-A 994 890, der BE-A 761 626 beschrieben werden, Isocyanuratgruppen aufweisende Polyisocyanate, wie sie z. B. in der US-A 4 288 586, in DE-B 1 022 789, 1 222 067 und 1 027 394, in DE-A 1 929 034, 2 004 048 und 2 839 133 oder in EP-A 10 589 beschrieben werden, Urethangruppen aufweisende Polyisocyanate, wie sie z. B. in der BE-A 752 261 oder in der US-A 3 394 164 beschrieben werden, acylierte Harnstoffgruppen aufweisende Polyisocyanate gemäß DE-B 1 230 778, Biuretgruppen aufweisende Polyisocyanate, wie sie z. B. in DE-B 1 101 394, in GB-A 889 050 und in FR-A 7 017 514 beschrieben werden.

Gut geeignet sind insbesondere auch die aus dem Stand der Technik bekannten « Lackpolyisocyanate », d. h. höherfunktionelle Polyisocyanate wie z. B. Tris-(6-isocyanatohexyl)-biuret, gegebenenfalls im Gemisch mit seinen höheren Homologen, Tris-(6-isocyanatohexyl)-isocyanurat, gegebenenfalls im Gemisch mit seinen höheren Homologen, wie es beispielsweise gemäß DE-A 2 839 133 durch Trimerisierung von Hexamethylendiisocyanat zugänglich ist, sowie weitere durch Trimerisierung von aliphatischen und/oder aromatischen Diisocyanaten, wie z. B. Isophorondiisocyanat, Diisocyanato-toluol oder Gemischen aus Diisocyanato-toluol und Hexamethylendiisocyanat erhältliche, Isocyanuratgruppen aufweisende Polyisocyanate. Sehr gut einsetzbare Polyisocyanate sind auch die an sich bekannten Urethangruppen aufweisenden Polyisocyanate eines unter 1 000 liegenden Molekulargewichts, wie sie beispielsweise durch Umsetzung von überschüssigen Mengen an 2,4-Diisocyanato-toluol mit einfachen mehrwertigen Alkoholen des Molekulargewichtsbereichs 62 bis 300, insbesondere mit Trimethylolpropan und anschließende destillative Entfernung des nicht umgesetzten Diisocyanatüberschusses erhalten werden können.

Polyisocyanate der beispielhaft genannten Art mit aliphatisch und/oder cycloaliphatisch gebundenen

Isocyanatgruppen sind erfindungsgemäß besonders gut geeignet. Selbstverständlich können auch beliebige Gemische der beispielhaft genannten Polyisocyanate zur Herstellung der erfindungsgemäßen Kombinationen eingesetzt werden.

Außer den beispielhaft genannten, niedermolekularen Polyisocyanaten können beim erfindungsgemäßen Verfahren auch die aus der Polyurethanchemie an sich bekannten höhermolekularen NCO-Prepolymeren auf Basis von urethangruppenfreien Polyisocyanaten der beispielhaft genannten Art und höhermolekularen Polyhydroxylverbindungen als Polyisocyanatkomponente eingesetzt werden. Diese NCO-Prepolymeren weisen im allgemeinen eine (mittlere) NCO-Funktionalität von 2 bis 4, vorzugsweise 2 bis 3 und ein mittleres, aus der Stöchiometrie der Ausgangsmaterialien errechenbares Molekulargewicht von 1 000 bis 10 000, vorzugsweise 1 200 bis 4 000 auf. Gemische derartiger NCO-Prepolymerer mit urethangruppenfreien Polyisocyanaten der beispielhaft genannten Art, insbesondere den zur Herstellung der NCO-Prepolymeren verwendeten Polyisocyanaten (Semiprepolymere) können beim erfindungsgemäßen Verfahren ebenfalls Polyisocyanatkomponente (i) eingesetzt werden.

Zur Herstellung der NCO-Prepolymeren geeignete, urethangruppenfreie Polyisocyanate sind beispielsweise solche der oben angegebenen allgemeinen Formel, insbesondere 2,4- und/oder 4,4-Diisocyanatotoluol, 1-Isocyanato-3,3,5-trimethyl-5-isocyanatomethyl-cyclohexan, Gemische aus 2,4'-Diisocyanatodiphenylmethan mit 4,4'-Diisocyanatodiphenylmethan, insbesondere solche mit einem Gehalt an 2,4'-Isomerem von mindestens 15 Gew.-% oder die den genannten aromatischen Diisocyanaten entsprechenden perhydrierten cycloaliphatischen Diisocyanate.

Reaktionspartner für diese Diisocyanate bei der Herstellung der NCO-Prepolymeren sind die aus der Polyurethanchemie bekannten, mindestens zwei gegenüber Isocyanatgruppen reaktionsfähige Gruppen, vorzugsweise primäre oder sekundäre Hydroxylgruppen aufweisenden Verbindungen des Molekulargewichtsbereichs 300 bis 10 000, vorzugsweise 400 bis 6 000 und insbesondere 800 bis 3 500, gegebenenfalls in Abmischung mit niedermolekularen, mehrwertigen Alkoholen des Molekulargewichtsbereichs 62 bis 300.

Geeignete höhermolekulare Polyhydroxylverbindungen sind die aus der Polyurethanchemie an sich bekannten Polyhydroxypolyester oder Polyhydroxypolyether. Polyhydroxypolythioether, Polyhydroxypolyacetale, Polyhydroxypolycarbonate oder Polyhydroxypolyesteramide der aus der Polyurethanchemie im Prinzip auch bekannten Art sind zur Herstellung der NCO-Prepolymeren ebenfalls geeignet, jedoch weniger bevorzugt.

Die Polyhydroxypolyester stellen z. B. Umsetzungsprodukte von mehrwertigen Alkoholen mit mehrwertigen Carbonsäuren dar. Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls z. B. durch Halogenatome substituiert und/oder ungesättigt sein. Beispiele geeigneter, mehrwertiger Carbonsäuren bzw. Carbonsäure-Derivate sind :

Bernsteinsäure, Adipinsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Maleinsäure, Maleinsäureanhydrid, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol-(1,4-bis-hydroxymethylcyclohexan), 2-Methyl-1,3-propandiol, Glycerin, Trimethylolpropan, Hexantriol-(1,2,6), Diethylenglykol, Triethylenglykol, Tetraethylenglykol oder Dipropylenglykol in Frage.

Die Polyester können anteilig endständige Carboxylgruppen aufweisen. Auch Polyester aus Lactonen, z. B. ε-Caprolacton oder Hydroxycarbonsäuren, z. B. ω-Hydroxycapronsäure, sind einsetzbar.

Auch die erfindungsgemäß in Frage kommenden, mindestens zwei Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von $BF_3$ oder durch Anlagerung dieser Epoxide, gegebenenfalls im Gemisch oder nacheinander, an Starktkomponenten mit reaktionsfähigen Wasserstoffatomen wie Alkohole und Amine, z. B. Wasser, Ethylenglykol, Propylenglykol-(1,3) oder -(1,2), 4,4'-Dihydroxy-diphenylpropan, Glycerin, Trimethylolpropan, Anilin, Ammoniak, Ethanolamin, Ethylendiamin hergestellt.

Auch durch Vinylpolymerisate modifizierte Polyether, wie sie z. B. durch Polymerisation von Styrol, Acrylnitril in Gegenwart von Polyethern entstehen (US-A 3 383 351, 3 304 273, 3 523 093 und 3 110 695 ; DE-B 1 152 536), sind ebenfalls geeignet.

Geeignete, jedoch weniger bevorzugte Polyhydroxy-polythioether, Polyhydroxypolyacetale, Polyhydroxypolycarbonate, Polyesteramide oder Polyamide bzw. die zu ihrer Herstellung geeigneten Ausgangsmaterialien sind beispielsweise die in US-A 4 218 543, Kolonne 8, Zeile 56-Kolonne 9, Zeile 15 genannten Verbindungen.

Bei dem gegebenenfalls im Gemisch mit den höhermolekularen Polyhydroxylverbindungen mitzuverwendenden niedermolekularen, mehrwertigen Alkoholen handelt es sich beispielsweise um Ethandiol, Propandiol-1,2 und -1,3, Butandiol-1,4 und -1,3, Pentandiole, Hexandiole, Octandiole, wie z. B. 2-Ethylhexandiol-1,3, Trimethylolpropan, Hexantriole oder Glycerin.

Vertreter der genannten, zur Herstellung der erfindungsgemäß geeigneten NCO-Prepolymere zu verwendenden Polyisocyanat- und Hydroxyl-Verbindungen sind z. B. in High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45 bis 71, beschrieben.

Die Herstellung der NCO-Prepolymeren erfolgt nach den bekannten Verfahren des Standes der Technik unter Einhaltung eines Äquivalentverhältnisses zwischen Isocyanatgruppen und Hydroxylgruppen von 1,05 : 1 bis 10 : 1, vorzugsweise 1,1 : 1 bis 3 : 1 im Temperaturbereich von ca. 30 bis 190 °C, vorzugsweise 50 bis 120 °C. Die Herstellung kann in der Schmelze oder in Gegenwart von inerten Lösungsmitteln wie z. B. Ethylacetat, Butylacetat, Ethylenglykolmonoethyletheracetat, Propylenglykolmonomethyletheracetat, Methyl-ethyl-keton, Methyl-isobutyl-keton, Toluol, Xylol oder deren Gemischen oder Weichmachern wie z. B. solchen auf Basis von Phosphorsäure-, Phthalsäure- oder Sulfonsäureestern erfolgen. Bei Verwendung eines über 2 : 1 liegenden Äquivalentverhältnisses zwischen Isocyanatgruppen und gegenüber Isocyanatgruppen reaktionsfähigen Gruppen entstehen bei dieser Umsetzung Gemische aus NCO-Prepolymeren mit überschüssigen Ausgangsdiisocyanaten (Semiprepolymere), die ebenfalls beim erfindungsgemäßen Verfahren eingesetzt werden können.

Bei den beim erfindungsgemäßen Verfahren einzusetzenden zumindest teilweise blockierten Polyaminen (ii) handelt es sich um Polyketimin-Gemische, die gegebenenfalls geringe Mengen von Verbindungen mit freien Aminogruppen enthalten können. Erfindungswesentlich ist, daß in diesen Gemischen Verbindungen mit Gruppen der Formel

$$-N=\overset{R^1}{\overset{|}{C}}-CH_2-R^2$$

neben bestimmten Anteilen an Verbindungen mit Gruppen der Formeln

$$-N=\overset{R^1}{\overset{|}{C}}-\overset{R^2}{\overset{|}{C}}=\overset{R^1}{\overset{|}{C}}-CH_2-R^2 \quad \text{und/oder} \quad -N=\overset{R^1}{\overset{|}{C}}-\overset{R^2}{\overset{|}{C}}=\underset{R^1}{\underset{|}{C}}-CH_2-R^2$$

vorliegen, worin $R^1$ und $R^2$ die oben angegebene Bedeutung haben.

Die erfindungsgemäß geeigneten Polyketimin-Gemische sind durch an sich bekannte Kondensationsreaktionen zwischen Polyaminen und Ketonen unter Wasserabspaltung zugänglich, wie sie beispielhaft in Houben-Weyl, Methoden der organischen Chemie, Band XI/2, Seiten 73 ff beschrieben sind. Vorzugsweise werden diese Gemische direkt durch Kondensation von Polyaminen und einfachen, nicht sterisch gehinderten und keine olefinische Doppelbindung enthaltenden Ketonen der Formel

$$O=\overset{R^1}{\overset{|}{C}}-CH_2-R^2$$

erhalten. Zur Erzeugung der erfindungswesentlichen funktionellen Gruppen der Struktur

$$-N=\overset{R^1}{\overset{|}{C}}-\overset{R^2}{\overset{|}{C}}=\overset{R^1}{\overset{|}{C}}-CH_2-R^2 \quad \text{und/oder} \quad -N=\overset{R^1}{\overset{|}{C}}-\overset{R^2}{\overset{|}{C}}=\underset{R^1}{\underset{|}{C}}-CH_2-R^2$$

kommen dabei Reaktionsbedingungen zur Anwendung, wie sie z. B. bei A. M. Paquin, Chem. Ber. 82, 316 (1949) und in US-A 2 498 419 beschrieben sind, um aus primären Aminen und einfachen Aldehyden oder Ketonen die im Sinne der Aldol-Kondensation « höherkondensierten » Schiff'schen Basen zu erhalten. Durch geeignete Wahl der Temperaturen und Reaktionszeiten werden die Kondensationsreaktionen so gelenkt, daß die Komponenten der Polyketimin-Gemische im erfindungsgemäßen Mengenverhältnis entstehen. Die Reaktion braucht dabei nicht so weit geführt zu werden, daß alle Aminogruppen der eingesetzten Polyamine vollständig blockiert sind ; es ist jedoch darauf zu achten, daß im Reaktionsprodukt die erfindungsgemäß genannten Mengen an Komponenten mit freien Aminogruppen nicht überschritten werden. Im allgemeinen sind diese Bedingungen dann erfüllt, wenn Gemische der nachstehend beispielhaft genannten Polyamine mit Ketonen der nachstehend beispielhaft genannten Art unter Einhaltung eines Äquivalentverhältnisses zwischen primären Aminogruppen und Ketongruppen von 1 : 1,1 bis 1 : 5, vorzugsweise 1 : 1,3 bis 1 : 3, gegebenenfalls in Gegenwart eines Schleppmittels zur Erleichterung der destillativen Entfernung des Kondensationswassers, wie z. B. Benzol, Toluol oder Xylol

und gegebenenfalls in Anwesenheit einer katalytischen Menge eines Reaktionsbeschleunigers für die Kondensationsreaktion, wie z. B. p-Toluolsulfonsäure, so lange auf ca. 80 bis 160 °C, vorzugsweise 110 bis 140 °C, unter destillativer Entfernung des Kondensationswassers erhitzt werden, bis pro Mol an zu Beginn der Reaktion vorliegenden primären Aminogruppen 0,8 bis 1,2, vorzugsweise 0,9 bis 1,1 Mol Wasser abgespalten sind. Diese Wassermengen beinhalten sowohl das z. B. an einem Wasserabscheider abgetrennte als auch das bei der nachfolgenden destillativen Entfernung von überschüssigem Keton und evtl. Schleppmitteln mit abdestillierte Wasser. Die von überschüssigem Keton und evtl. Schleppmitteln befreiten Rohgemische der so durchgeführten Kondensationsreaktionen können ohne weitere Reinigung in erfindungsgemäßer Weise als Komponente (ii) zur Kombination mit den o.g. Isocyanatgruppen aufweisenden Verbindungen (i) verwendet werden. Sie weisen die oben und die im Hauptanspruch unter a) bis e) angegebene Zusammensetzung auf. Unter e) sind die ganz oder teilweise blockierten Polyamine zusammengefaßt, die nicht unter a) bis d) genannt sind und neben diesen Hauptkomponenten in geringen Mengen mitgebildet werden können. Es handelt sich dabei z. B. um organische Verbindungen, die eine freie primäre oder sekundäre Aminogruppe und mindestens eine Ketimingruppe der unter b) genannten Formel aufweisen, oder um solche, die frei von primären und sekundären Aminogruppen sind und zwei oder mehrere Ketimingruppen der unter b) genannten Formel aufweisen, oder auch um solche, die Ketimingruppen mit mehr als zwei konjugierten Doppelbindungen aufweisen. Im allgemeinen ist der Mengenanteil jeder einzelnen der unter e) zusammengefaßten Komponenten nicht größer als 1 %, bezogen auf das Gesamtgemisch der zumindest teilweise blockierten Polyamine. Ihr Einfluß auf die anwendungstechnischen Eigenschaften der erfindungsgemäßen Kombinationen ist daher vernachlässigbar klein.

Besonders bevorzugt sind solche Polyketimingemische, deren Einzelkomponenten Struktureinheiten der genannten Formeln aufweisen, für welche $R^1$ für einen primären oder sekundären, gesättigten, aliphatischen Kohlenwasserstoffrest mit 1 bis 4 Kohlenstoffatomen, insbesondere einen Methyl-, Ethyl-, Isopropyl- oder Isobutyl-Rest steht und $R^2$ Wasserstoff oder einen primären oder sekundären, gesättigten aliphatischen Kohlenwasserstoffrest mit 1 bis 3 Kohlenstoffatomen, insbesondere einen Methyl-, Ethyl- oder Isopropylrest bedeutet, wobei vorzugsweise die Summe der in den Resten $R^1$ und $R^2$ vorliegenden Kohlenstoffatomen bei 1 bis 4 liegt.

Die zur Herstellung der erfindungsgemäß einsetzbaren Polyketimin-Gemische (ii) geeigneten Polyamine sind an sich bekannte organische Verbindungen mit mindestens zwei primären, vorzugsweise mit primären und/oder sekundären Kohlenstoffatomen verknüpften Aminogruppen und gegebenenfalls weiteren sekundären Aminogruppen.

Vorzugsweise handelt es sich um aliphatische oder cycloaliphatische diprimäre Diamine, wobei sich die Bezeichnung « aliphatisch » bzw. « cycloaliphatisch » auf die Natur der mit den Aminogruppen verknüpften Kohlenstoffatome bezieht. So sind im Rahmen der vorliegenden Erfindung auch araliphatische Diamine als aliphatische Diamine anzusehen. Besonders bevorzugt werden solche Diamine eingesetzt, die in ihrem Molekül mindestens einen cycloaliphatischen Ring mit insbesondere 6 Ring-Kohlenstoffatomen aufweisen, wobei es unerheblich ist, ob die Aminogruppen direkt mit diesem cycloaliphatischen Ring oder mit einem Alkyl-Substituenten, insbesondere Methyl-Substituenten dieses aliphatischen Rings verknüpft sind. Die beim erfindungsgemäßen Verfahren einzusetzenden Diamine weisen im allgemeinen ein Molekulargewicht von 60 bis 500, vorzugsweise 100 bis 250, auf.

Beispiele geeigneter, beim erfindungsgemäßen Verfahren einzusetzender Polyamine sind Ethylendiamin, Trimethylendiamin, Tetramethylendiamin, Hexamethylendiamin, Propylendiamin-1,2, das Isomerengemisch von 2,2,4- und 2,4,4-Trimethylhexamethylendiamin, 1,3- und 1,4-Xylylendiamin, Methyl-bis-(3-aminopropyl)-amin oder auch sekundäre Aminogruppen aufweisende Polyamine wie z. B. Bis-(2-aminoethyl)-amin.

Zu den bevorzugten Diaminen gehören cyclophatische bzw. aliphatisch/cycloaliphatische Diamine des Molekulargewichtsbereichs 114 bis 300 wie beispielsweise :

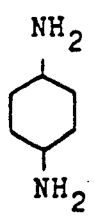
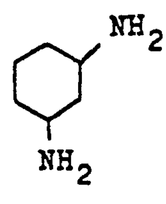
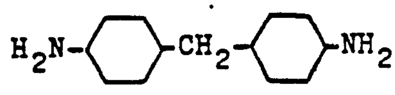

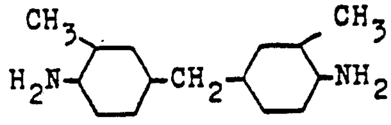
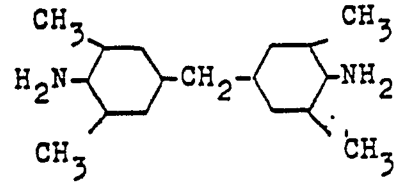

(Fortsetzung)

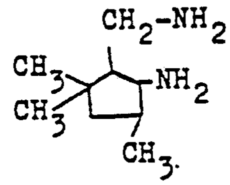

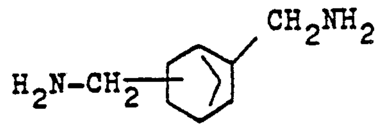

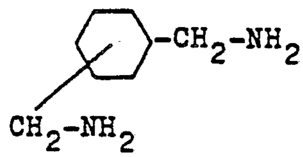

Besonders bevorzugt sind :

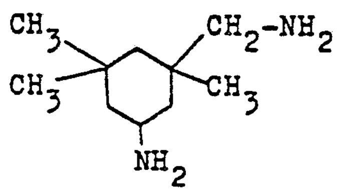

(Isophorondiamin)

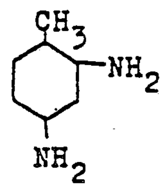

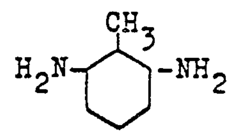

(2- bzw. 4-Methyl-cyclohexan-1,3-diamin)

Die zur Herstellung der erfindungsgemäß einzusetzenden Polyketimin-Gemische (ii) geeigneten Ketone sind vorzugsweise Verbindungen des Typs

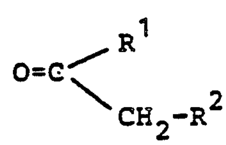

worin $R^1$ und $R^2$ die oben angegebene Bedeutung haben.

Es handelt sich also um aliphatische Ketone mit insgesamt 3 bis 19, vorzugsweise 3 bis 6 Kohlenstoffatomen oder um cycloaliphatische Ketone mit 5 bis 12, vorzugsweise 5 oder 6 Kohlenstoffatomen. Vorzugsweise sind die Ketone nicht sterisch gehindert, was in dem Sinne zu verstehen ist, daß ihre Carbonylgruppen nicht direkt an ein tertiäres Kohlenstoffatom gebunden sind. Beispiele geeigneter Ketone sind Aceton, Methylethylketon, Methylpropylketon, Methylisopropylketon, Diethylketon, Methylisobutylketon, Dipropylketon, 3-Methyl-5-heptanon, Diisobutylketon, Methylnonylketon, Dinonylketon, Cyclopentanon, Cyclohexanon, Methylcyclohexanon und 3,3,5-Trimethylcyclohexanon (Dihydro-isophoron). Bevorzugt sind solche Ketone der beispielhaft genannten Art, insbesondere Dialkylketone, die ein Molekulargewicht von 58 bis 100 aufweisen.

Besonders bevorzugt zur Herstellung der erfindungsgemäß geeigneten Polyketimin-Gemische (ii) sind Methylethylketon und Methylisobutylketon. Nach dem vorstehend Gesagten sind daher solche Polyketimin-Gemische ganz besonders bevorzugt, die aus Methylethylketon oder Methylisobutylketon und Isophorondiamin oder 2- und/oder 4-Methylcyclohexan-1,3-diamin hergestellt worden sind. Selbstverständlich können erfindungsgemäß geeignete Polyketimin-Gemische (ii) auch aus Mischungen verschiedener Polyamine und/oder verschiedener Ketone der o.g. Art hergestellt werden.

Zur Herstellung der erfindungsgemäßen Kombinationen werden die oben im einzelnen beschriebenen Komponenten, d. h. die organischen Polyisocyanate oder NCO-Prepolymeren (i) und die Polyketimin-Gemische (ii) miteinander vermischt. Es ist auch möglich, Gemische aus organischen Polyisocyanaten und NCO-Prepolymeren der vorstehend genannten Art zur Abmischung mit den Polyketimin-Gemischen einzusetzen. Das Mengenverhältnis zwischen den Komponenten wird hierbei im allgemeinen so gewählt, daß das Äquivalentverhältnis von Isocyanatgruppen zur Summe aus blockierten und freien Aminogruppen zwischen 0,9 : 1 und 4 : 1, vorzugsweise zwischen 1 : 1 und 2 : 1 und insbesondere zwischen 1 : 1 und 1,2 : 1 liegt. Gegebenenfalls in den Polyketimin-Gemischen vorliegende freie primäre und/oder sekundäre Aminogruppen reagieren spontan mit einem Teil der Isocyanatgruppen der Polyisocyanat-Komponente unter Harnstoffbildung ab. Bei den erfindungsgemäßen Verfahrensprodukten handelt es sich somit um Kombinationen, die Gemische und außerdem gegebenenfalls Harnstoffgruppen aufweisende Umsetzungsprodukte der Einzelkomponenten darstellen.

Wenn das Mengenverhältnis der Komponenten so gewählt wird, daß in den erfindungsgemäßen Kombinationen überschüssige Isocyanatgruppen vorliegen, können diesen Kombinationen auch noch andere gegenüber NCO-Gruppen reaktive Verbindungen beigemischt werden, die jedoch langsamer mit den NCO-Gruppen reagieren sollten als die den Polyketimin-Komponenten zugrundeliegenden Polyamine. Hierfür kommen z. B. Polyhydroxylverbindungen in Betracht, wie sie vorstehend schon als Aufbaukomponenten der erfindungsgemäß geeigneten NCO-Prepolymeren beschrieben wurden. Setzt man keine weitere NCO-reaktive Komponente zu, so können überschüssige NCO-Gruppen selbstverständlich auch nach Applikation der erfindungsgemäßen Kombinationen mit Luftfeuchtigkeit abreagieren.

Vor, während oder nach der Vermischung können den einzelnen Komponenten bzw. den erfindungsgemäßen Kombinationen inerte organische Lösungsmittel oder Weichmacher zugegeben werden. Gegebenenfalls können Lösungsmittel oder Weichmacher auch schon während der Herstellung einer oder mehrerer Ausgangskomponenten zugegen sein, wie dies vorstehend bei der Herstellung der erfindungsgemäß geeigneten NCO-Prepolymeren beschrieben ist. Die dort beispielhaft genannten Lösungsmittel oder Weichmacher sind auch zur Verdünnung der erfindungsgemäßen Kombinationen geeignet. Sie sollten weitgehend wasserfrei sein, um eine ausreichende Lagerstabilität der Gemische zu gewährleisten. Im allgemeinen werden die Lösungsmittel oder Weichmacher nur in solchen Mengen mitverwendet, wie es zur Einstellung einer ausreichenden Verarbeitungsviskosität der erfindungsgemäßen Kombinationen erforderlich ist. Vorzugsweise werden Festkörpergehalte von mindestens 50 %, insbesondere 60 bis 90 Gew.-% eingestellt ; bei geeigneter Wahl der Ausgangskomponenten ist es jedoch prinzipiell auch möglich, Kombinationen zu erhalten, die 100 %ig, also ohne Lösungsmittel, angewandt werden können.

Die erfindungsgemäßen Kombinationen stellen im allgemeinen bei Raumtemperatur flüssige Gemische dar, die in Abwesenheit von Wasser lagerstabil sind und nach Applikation auf ein geeignetes Substrat in Gegenwart von Wasser (Feuchtigkeit) schnell aushärten. Sie eignen sich somit als Lacke, Beschichtungs- oder Dichtungsmassen. Der für die meisten Anwendungen erforderliche Zusatz von Pigmenten und anderen Hilfs- und Zusatzmitteln der Lacktechnologie wie Füllstoffen, Verlaufhilfsmitteln usw. wird vorzugsweise so vorgenommen, daß diese Zusatzmittel vor Herstellung der erfindungsgemäßen Kombinationen in die Ausgangskomponenten, vorzugsweise in die Isocyanatkomponente, eingemischt werden. Dabei ist wiederum auf die Wasserfreiheit der Zusatzmittel zu achten. Die Menge dieser im allgemeinen festen Zusatzmittel ist bei der Berechnung des o.g. Festkörpergehaltes mit zu berücksichtigen.

Zur Anwendung der Beschichtungsmittel auf der Basis der erfindungsgemäßen Kombinationen stehen ausreichende Topfzeiten zur Verfügung, die in jedem Fall mehrere Tage betragen. Innerhalb dieser Zeit können die Beschichtungsmittel nach an sich bekannten Methoden, wie beispielsweise durch Spritzen, Streichen, Tauchen, Fluten oder mit Hilfe von Walzen oder Rakeln auf beliebige Substrate ein- oder mehrschichtig aufgetragen werden. Die Überzüge werden dann an der Luft bei Raumtemperatur oder auch bei erhöhter Temperatur getrocknet. Durch Anwendung von Wärme beim Trocknungsvorgang läßt sich die an sich schon schnelle Aushärtung noch weiter beschleunigen. Im allgemeinen können dabei Temperaturen bis etwa 130 °C angewandt werden.

Als Untergründe für die erfindungsgemäßen Überzüge kommen beliebige Substrate in Betracht, wie z. B. : Metall, Holz, Glas, Stein, keramische Materialien, Beton, harte und flexible Kunststoffe, Textilien, Leder und Papier. Diese Substrate können vor der Beschichtung mit den erfindungsgemäßen Beschichtungsmitteln gegebenenfalls auch mit üblichen Grundierungen versehen sein.

Die nachstehenden Beispiele demonstrieren exemplarisch Herstellung und Eigenschaften der erfindungsgemäßen Produkte. Prozentangaben beziehen sich, wenn nicht anders angegeben, auf Gewichtsprozente. Angaben in « Teilen » beziehen sich auf Gewichtsteile.

A1) Synthese eines NCO-Gruppen aufweisenden Prepolymers

Aus 437 Teilen eines linearen Polyesters mit einem mittleren Molekulargewicht von 1 700, der aus 523 Teilen Adipinsäure, 309 Teilen 1,6-Hexandiol und 168 Teilen Neopentylglykol erhalten wird, 51 Teilen eines verzweigten Polyesters mit einer OH-Zahl von 145, der aus 334 Teilen Isophthalsäure, 118 Teilen Adipinsäure, 60 Teilen Phthalsäureanhydrid und 380 Teilen 1,6-Hexandiol und 108 Teilen Trimethylolpropan erhalten wird, 31 Teilen 1,6-Hexandiol sowie 231 Teilen 3-Isocyanatomethyl-3,5,5-trimethylcyclohexanisocyanat und 250 Teilen Butylacetat/Xylol = 1 : 1 wird ein NCO-haltiges Prepolymer mit einem NCO-Gehalt von 3,4 % und einer Viskosität bei 23 °C von 1 500 mPa · s hergestellt.

A2) Synthese eines NCO-Gruppen aufweisenden Prepolymers

Aus 304 Teilen eines linearen Polyesters, der aus 523 Teilen Adipinsäure, 309 Teilen 1,6-Hexandiol und 168 Teilen Neopentylglykol gebildet wird und ein mittleres Molekulargewicht von 1 700 hat, 105 Teilen eines linearen Polyesters aus Adipinsäure und 1,6-Hexandiol mit einem mittleren Molekulargewicht von 840, 24 Teilen Trimethylolpropan und 13 Teilen 2-Ethyl-1,3-hexandiol sowie 254 Teilen 3-Isocyanatomethyl-3,5,5-trimethylcyclohexanisocyanat wird in 300 Teilen Ethylglykolacetat ein Prepolymer mit einem NCO-Gehalt von 3,9 % und einer Viskosität bei 23 °C von 1 100 mPa · s hergestellt.

A3) Synthese eines NCO-Gruppen aufweisenden Prepolymers

Aus 242 Teilen Hexamethylendiisocyanat, 421 Teilen eines verzweigten Polyesters mit einer OH-Zahl von 145, der aus 334 Teilen Isophthalsäure, 118 Teilen Adipinsäure, 60 Teilen Phthalsäureanhydrid, 380 Teilen 1,6-Hexandiol und 108 Teilen Trimethylolpropan erhalten wird, 77 Teilen eines linearen Polyesters aus Adipinsäure und 1,4-Butandiol mit einer OH-Zahl von 124 und 11 Teilen 3-Hydroxymethyl-4-heptanol wird ein verzweigtes Prepolymer mit einem NCO-Gehalt von 8,4 % und einer mittleren Funktionnalität von 2,6 erhalten. Dieses Prepolymer wird mit 250 Teilen Butylacetat zu einer 75 %igen Lösung verdünnt.

B) Herstellung von erfindungsgemäß geeigneten Polyketimin-Gemischen

Allgemeine Arbeitsvorschrift

Zur Herstellung der Ketimine werden die Diamine, Ketone und gegebenenfalls das Schleppmittel gemischt und mit ca. 0,01 % p-Toluolsulfonsäure, bezogen auf Amin, versetzt. Man erhitzt unter $N_2$-Atmosphäre am Wasserabscheider unter kräftigem Rückfluß, bis die vorab berechnete Wassermenge abgetrennt ist und engt die Lösung im Vakuum ein. Die angegebenen Zusammensetzungen der Produkte wurden gaschromatographisch bestimmt, wobei alle Komponenten, die in einer Menge von mehr als 1 % enthalten waren, erfaßt wurden. Die Zuordnung der Verbindungen erfolgte anhand der Massenspektren. Die Komponente b) der Polyketimin-Gemische mit olefinisch ungesättigten Doppelbindungen liegt im allgemeinen in Form von cis-, trans-Isomerengemischen vor. Bezüglich der anwendungstechnischen Eigenschaften der erfindungsgemäßen Kombinationen ist dies jedoch völlig irrelevant. Aus diesem Grund wird weder in der allgemeinen Beschreibung noch in den nachfolgenden Ausführungsbeispielen auf diese cis-, trans-Isomerie näher eingegangen.

B1)

Aus 170 Teilen 3-Aminomethyl-3,5,5-trimethylcyclohexanamin (Isophorondiamin), 210 Teilen 2-Butanon (Methylethylketon) und 200 Teilen Toluol erhält man nach Abscheidung von 35 Teilen Wasser bei einer Reaktionstemperatur von 130 °C 270 Teile eines Polyketimin-Gemischs mit der Zusammensetzung : 2 % Toluol, 8 % (13 Aminäquivalentprozent) Isophorondiamin, 4 % (5 Aminäquivalentprozent) Monoketimin (MG 224) der Struktur :

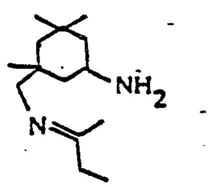

und/oder

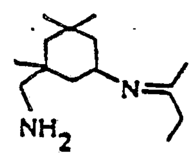

72 % (72 Aminäquivalentprozent) Bisketimin (MG : 278) der Struktur :

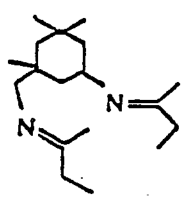

und 12 % (10 Aminäquivalentprozent) Bisketimin (MG : 332) der Struktur :

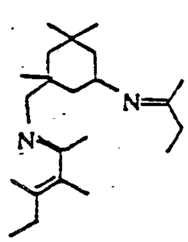

,

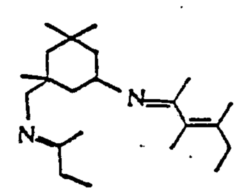

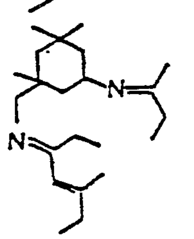

und/oder

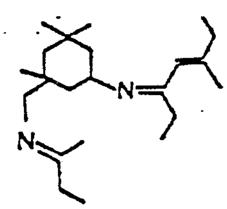

B2)

Aus 170 Teilen 3-Aminomethyl-3,5,5-trimethylcyclohexanamin (Isophorondiamin) und 400 Teilen 4-Methyl-2-pentanon (Methyl-isobutylketon) werden bei einer Reaktionstemperatur von 140 °C 32 Teile Wasser abgeschieden. Man erhält 320 Teile eines Gemischs mit folgender Zusammensetzung : 1 % Methylisobutylketon, 1 % (2 Aminäquivalentprozent) Isophorondiamin, 4 % (5 Aminäquivalentprozent) Monoketimin (MG : 252) der Struktur :

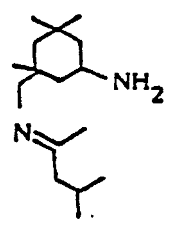

und / oder

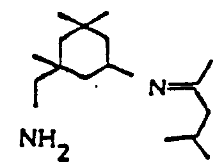

86 % (86 Aminäquivalentprozent) Bisketimin (MG : 334)

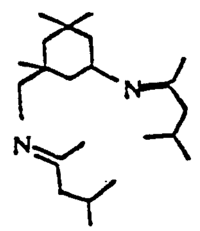

und 8 % (7 Aminäquivalentprozent) Bisketimin (MG : 416) mit den Strukturen :

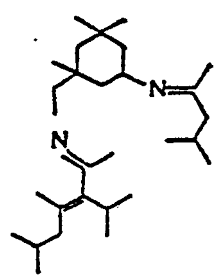

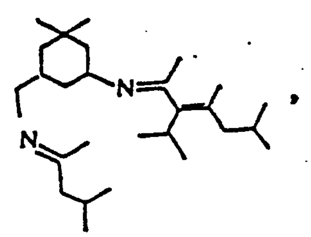

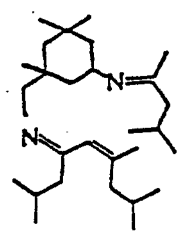

und / oder

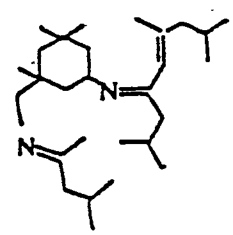

B3)

Man scheidet aus einer Mischung von 128 Teilen 2- und 4-Methyl-1,3-cyclohexandiamin und 400 Teilen 4-Methyl-2-pentanon (Methyl-isobutylketon) unter mehrstündigem Rühren bei 140 °C 33 Teile Wasser ab und erhält 278 Teile eines Polyketimin-Gemischs mit der Zusammensetzung : 1 % Methylisobutylketon, 9 % (12 Aminäquivalentprozent) Monoketimin (MG : 210) mit der Struktur :

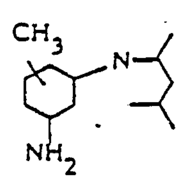

84 % (83 Aminäquivalentprozent) Bisketimin (MG : 292)

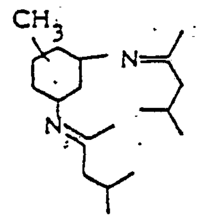

und 6 % (5 Aminäquivalentprozent) Bisketimin (MG : 374) mit den Strukturen

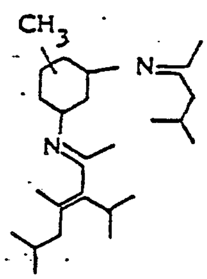

und/ oder

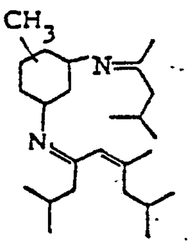

B4)

Aus 136 Teilen 1,3-Xylylendiamin und 400 Teilen 4-Methyl-2-pentanon (Methyl-isobutylketon) werden bei einer Reaktionstemperatur von 140 °C 35 Teile Wasser abgeschieden. Man erhält 305 Teile eines Gemisches aus 81 % (84 Aminäquivalentprozent) Bisketimin (MG : 300)

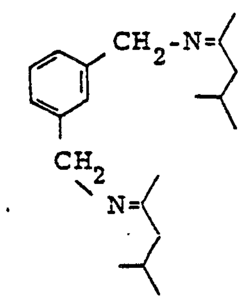

und 19 % (16 Aminäquivalentprozent) Bisketimin (MG : 382) mit den Strukturen :

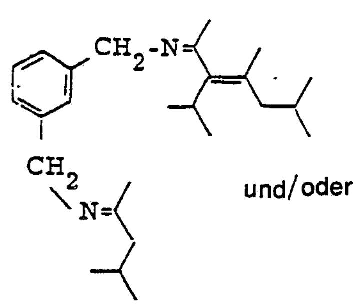

und/oder

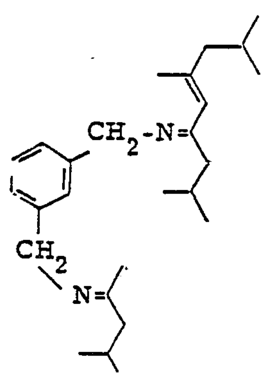

C) Synthese sterisch gehinderter Polyketimine

Zur Darstellung der Polyketimine verfährt man wie unter Punkt B) in der allgemeinen Arbeitsvorschrift beschrieben.

C1)

Nach der Abtrennung von 30 Teilen Wasser aus einer Mischung von 170 Teilen 3-Aminomethyl-3,5,5-trimethyl-cyclohexanamin (Isophorondiamin) und 600 Teilen 3,3-Dimethylbutanon (Methyl-tert.-butylketon) durch mehrstündiges Rühren bei 130 °C erhält man 312 Teile eines Gemischs mit der Zusammensetzung : 1 % Methyl-tert.-butylketon, 5 % Monoketimin (MG : 252) der Strukturformel :

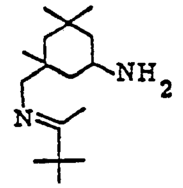

und / oder

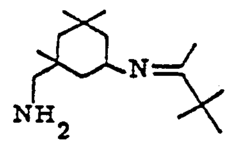

und 94 % Bisketimin (MG : 334) der Struktur

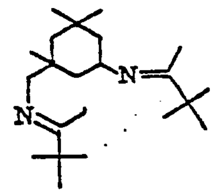

C2)

128 Teile 2- und 4-Methyl-1,3-cyclohexandiamin im Gemisch und 600 Teile 3,3-Dimethylbutanon (Methyl-tert.-butylketon) liefern nach der Abscheidung von 29 Teilen Wasser bei einer Reaktionstemperatur von 130 °C 270 Teile blockiertes Diamin. Man destilliert zu 170 Teilen Bisketimin (MG : 292)

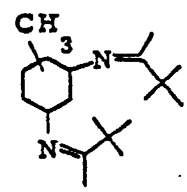

in 100 %iger Reinheit (Sdp. : 105-110 °C/0,53 mbar).

C3)

Aus 136 Teilen 1,3-Xylylendiamin und 600 Teilen 3,3-Dimethylbutanon (Methyl-tert.-butylketon) werden bei 130 °C 33 Teile Wasser abgeschieden. Man destilliert bei 145 °C/0,8 mbar und erhält 281 Teile eines Gemisches mit der Zusammensetzung :

2 % Monoketimin (MG : 218) der Struktur

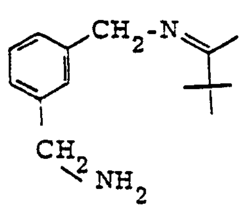

und 98 % Bisketimin (MG : 300) der Struktur

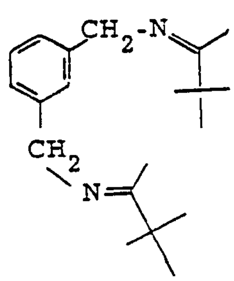

Beispiel 1

792 Teile der nach Synthesevorschrift A1) hergestellten 75 %igen Lösung eines NCO-haltigen Prepolymers werden mit 106 Teilen des nach Vorschrift B2) erhaltenen Ketimin-Gemischs aus Isophorondiamin und Methyl-isobutylketon und 102 Teilen Butylacetat/Xylol = 1 : 1 zu einem 70 %igen Klarlack gemischt. Während die Topfzeit des Lacks im geschlossenen Gebinde ca. 45 Tage beträgt, ist ein in 40 µm Schichtdicke aufgebrachter Lackfilm an der Luft bei Raumtemperatur bereits nach 30 Minuten sand- und nach 60 Minuten drucktrocken. Nach Alterung entsteht ein elastischer und gegen Abrieb widerstandsfähiger Lack.

Lackprüfung (40 µm Schichtdicke)

Dornbiegeprüfung (ASTM-D-522, kon. Dorn) : ohne Befund Tiefung nach Erichsen (DIN 53156) : 10,6 (Blechriß) Schlagtiefung (ASTM-D-2794, Kugelschlagtest ∅ 15,9 mm) : > 9 Nm

Abriebfestigkeit (Taber Abraser, Schleifrolle CS 10, Belastung 10 N, 1 000 U) : < 5 mg.

Die Trocknungszeit dieses Lackes kann durch Temperaturerhöhung noch weiter reduziert werden. Bei 80 °C werden nach weniger als 30 Minuten, bei 130 °C nach weniger als 20 Minuten, bereits die oben angegebenen Endeigenschaften des Lackes erreicht.

Beispiel 2

Vergleichsbeispiel zu Beispiel 1

Es wird ein Lack hergestellt wie in Beispiel 1 beschrieben, wobei jedoch als blockiertes Diamin das gemäß Synthesevorschrift C1) erhaltene Ketimin verwendet wird. Der Klarlack wird mit 102 Teilen Butylacetat/Xylol = 1 : 1 aus 792 Teilen des nach Vorschrift A1) hergestellten Prepolymers und 106 Teilen des nach Vorschrift C1) erhaltenen Ketimins gemischt. Die Topfzeit dieses Lacks beträgt im geschlossenen Gebinde gleichermaßen ca. 45 Tage, wobei jedoch der Lackfilm erst nach 2 Stunden sandtrocken und nach ca. 3,5 Stunden drucktrocken ist.

Beispiel 3

838 Teile des nach Synthesevorschrift A2) hergestellten NCO-haltigen Prepolymers werden mit 113 Teilen des Ketimin-Gemischs gemäß B3) und 49 Teilen Butylacetat/Xylol = 1 : 1 zu einem 70 % Festkörper enthaltenden Klarlack gemischt. Die Topfzeit des Lacks im geschlossenen Gebinde beträgt ca. 10 Tage, die gut für eine praktikable Verarbeitung ausreichen. Die Sandtrocknung des Lackfilms ist nach ca. 1 Stunde erreicht, die Drucktrocknung nach ca. 2 Stunden und 15 Minuten.

Beispiel 4

Vergleichsbeispiel zu Beispiel 3

Zum Vergleich wird ein Lack hergestellt, der ein Ketimin aus einem sterisch gehinderten Keton enthält. 838 Teile des nach Vorschrift A2) hergestellten Prepolymers und 113 Teile des nach Vorschrift C2) erhaltenen Bisketimins aus Methyl-1,3-cyclohexandiamin und Methyl-tert.-butylketon liefern mit 49 Teilen Butylacetat/Xylol = 1 : 1 einen Lack, der eine Topfzeit im geschlossenen Gebinde von mehr als 10 Tagen hat, der jedoch eine gegenüber Beispiel 3 deutlich längere Trocknungszeit aufweist (nach 3 Stunden und 20 Minuten sandtrocken und erst nach über 8 Stunden drucktrocken) und damit für die Praxis ungeeignet ist.

Beispiel 5

Durch Mischen von 813 Teilen NCO-haltigem Prepolymer, das nach Vorschrift A1) hergestellt wird, mit 90 Teilen des nach Vorschrift B1) erhaltenen Ketimin-Gemischs und 97 Teilen Butylacetat/Xylol = 1 : 1 wird ein Lack erhalten. Bei einer Topfzeit des Lacks im geschlossenen Gebinde von ca. 9 Tagen ist nach Aufbringen des Lackfilms bereits nach 10 Minuten Sandtrocknung und schon nach 35 Minuten Drucktrocknung erreicht.

Beispiel 6

Aus dem Prepolymer, das nach Vorschrift A1) erhalten wird und einen NCO-Gehalt von 3,4 % aufweist, und dem nach Vorschrift B2) erhaltenen Ketimin-Gemisch wird ein mit Titandioxid pigmentierter Weißlack in Butylacetat/Xylol = 1 : 1 hergestellt, wobei die Komponenten im Mengenverhältnis 528 : 71 : 233 : 168 verwendet werden. Ein Lackfilm ist bereits nach 35 Minuten sandtrocken und nach 1 Stunde und 35 Minuten drucktrocken ; trotzdem ist eine Topfzeit im geschlossenen Gebinde von mehr als 20 Tagen gewährleistet.

Lackprüfung nach Alterung (50 µm Schichtdicke) Glanz (DIN 67530, 60° Reflektometerwert) : 90 Dornbiegeprüfung (ASTM-D-522, konz. Dorn) : ohne Befund Schlagtiefung (ASTM-D-2794, Kugelschlagtest ∅ 15,9 mm) : > 9 Nm

Abriebfestigkeit (Taber Abraser, Schleifrolle CS 10, Belastung 10 N, 1 000 U) : < 10 mg.

Durch Temperaturerhöhung kann die Trocknungszeit des Lacks bei 80 °C auf 30 Minuten oder bei 130 °C auf 20 Minuten reduziert werden.

## Beispiel 7

### Vergleichsbeispiel zu Beispiel 6

Es wird ein gleicher pigmentierter Lack hergestellt, wie in Beispiel 6 beschrieben, unter Beibehaltung der Mengenverhältnisse der eingesetzten Komponenten, wobei jedoch das Ketimin durch das nach Vorschrift C1) hergestellte Ketimin auf der Basis eines sterisch gehinderten Ketons ersetzt wird. Bei gleicher Topfzeit im geschlossenen Gebinde von über 20 Tagen wird eine Sandtrocknung jedoch erst nach 2 Stunden und 45 Minuten erreicht, und noch nach 8 Stunden ist der Lack nicht drucktrocken.

## Beispiel 8

560 Teile des nach Vorschrift A2) zugänglichen Isocyanatgruppen enthaltenden Prepolymers, 75 Teile des nach Vorschrift B3) hergestellten Ketimin-Gemischs aus Methyl-1,3-cyclohexandiamin und Methylisobutylketon und 233 Teile Titandioxid werden mit 132 Teilen Butylacetat/Xylol zu einem 70 % Festkörper enthaltenden pigmentierten Weißlack verarbeitet. Während die Topfzeit im geschlossenen Gebinde ca. 10 Tage beträgt, wird eine sehr schnelle Trocknung des Lackfilms erreicht, ca. 30 Minuten bis zur Sandtrocknung und nur 1 Stunde und 15 Minuten bis zur Drucktrocknung.

## Beispiel 9

### Vergleichsbeispiel zu Beispiel 8

Es wird ein pigmentierter Lack hergestellt, wie in Beispiel 8 beschrieben, mit dem Unterschied, daß anstelle des Ketimin-Gemischs aus dem sterisch nicht gehinderten Keton Methylisobutylketon ein Ketimin aus dem sterisch gehinderten Keton Methyl-tert.-butylketon, ausgehend vom gleichen Diamin, verwendet wird. Die Komponenten werden in gleichen Mengen verwendet, das Ketimin wird wie in Vorschrift C2) beschrieben erhalten. Dieser Lack hat verglichen mit dem des Beispiels 8 zwar ebenfalls eine lange Topfzeit von über 20 Tagen, doch auch eine deutlich längere Trocknungszeit, ca. 1 Stunde und 30 Minuten bis zur Sandtrocknung und sogar ca. 6 Stunden bis zur Drucktrocknung.

## Beispiel 10

543 Teile des Isocyanatgruppen enthaltenden Prepolymers, das nach Vorschrift A1) hergestellt wird, 60 Teile des Ketimin-Gemischs aus Vorschrift B1), 233 Teile Titandioxid und 164 Teile Butylacetat/Xylol = 1 : 1 werden zu einem pigmentierten Lack verarbeitet, der 70 % Festkörper enthält. Bei einer Topfzeit im geschlossenen Gebinde von 11 Tagen ist der Lackfilm bereits nach 20 Minuten sandtrocken und nach ca 1 Stunde drucktrocken.

## Beispiel 11

Aus 253 Teilen eines Isocyanuratgruppen enthaltenden Polyisocyanats mit einem NCO-Gehalt von 21,5 %, das durch Trimerisierung von 1,6-Hexandiisocyanat erhalten wird, 214 Teilen des Ketimin-Gemischs gemäß B2) und 233 Teilen Titandioxid wird in 300 Teilen Butylacetat/Xylol = 1 : 1 ein pigmentierter Weißlack hergestellt, der im geschlossenen Gebinde eine Topfzeit von ca. 10 Tagen aufweist. Ein aufgebrachter Lackfilm trocknet in 1 Stunde und 10 Minuten bis zur Sandtrocknung und ca. 3 Stunden bis zur Drucktrocknung.

Die Lackprüfung zeigt, daß der hochelastische Lackfilm bereits nach wenigen Stunden Trocknung nahezu die Endhärte erreicht hat.

Schichtdicke : 45 µm
Pendelhärte (DIN 53157)
nach 4 h 84 s
nach 24 h 87 s
nach 14 d 95 s
Glanz (DIN 67530, 60° Reflektometerwert) : 88
Dornbiegeprüfung (ASTM-D-522, kon. Dorn) : ohne Befund
Schlagtiefung (ASTM-D-2794, Kugelschlagtest ∅ 15,9 mm) : > 9 Nm.

Beispiel 12

Vergleichsbeispiel zu Beispiel 12 der DE-B 1 520 139

Aus 529 Teilen der nach Synthesevorschrift A3) hergestellten Lösung eines verzweigten NCO-haltigen Prepolymers auf der Basis von Hexamethylendiisocyanat und Polyesterpolyol (NCO-Gehalt im Feststoff : 8,5 %, mittlere Funktionalität : 2,6) und 103 Teilen eines nach Synthesevorschrift B4) erhaltenen erfindungsgemäßen Ketimin-Gemisches auf der Basis von m-Xylylendiamin und Methylisobutylketon sowie 368 Teilen Butylacetat wird ein 50 %iger Klarlack hergestellt (Lack A).

Zum Vergleich wird ein 50 %iger Klarlack aus 534 Teilen der nach Vorschrift A3) hergestellten Prepolymer-Lösung und 99 Teilen des nach Vorschrift C3) erhaltenen sterisch gehinderten Ketimins auf der Basis von m-Xylylendiamin und Methyl-tert.-butylketon sowie 366 Teilen Butylacetat hergestellt (Lack B).

In Tabelle 1 sind die Topfzeiten dieser Lacke denen analoger Lacke aus DE-B 1 520 139 (s. dort Beispiel 12) gegenübergestellt, die ebenfalls ein verzweigtes, NCO-haltiges Prepolymer auf der Basis von Hexamethylendiisocyanat mit einem NCO-Gehalt von 8,3 % und einer rechnerischen Funktionalität von 2,7 enthalten und ebenfalls als 50 %ige Lösungen in Butylacetat angewendet werden.

Der Vergleich in Tabelle 1 zeigt den technischen Vorteil, der aus der Verwendung der Polyketimin-Gemische gemäß vorliegender Erfindung resultiert : Während das Polyketimin auf der Basis von Methylisobutylketon gemäß DE-B 1 520 139 gegenüber seinem « sterisch gehinderten » Analogon auf der Basis von Methyl-tert.-butylketon sehr erhebliche Nachteile bezüglich der Lagerstabilität der daraus hergestellten Lacke zeigt (vgl. Lacke I und J), erweist sich der Lack A aus dem Polyketimin-Gemisch gemäß vorliegender Erfindung (Basis : Methylisobutylketon) als ebenso gut handhabbar wie der Lack B aus dem « sterisch gehinderten » Polyketimin (Basis : Methyl-tert.-butylketon).

(Siehe Tabelle 1 Seite 17 f.)

Tabelle 1

| Lack | Polyketimin aus m-Xylylendiamin und | NCO/"$NH_2$" [1)] | Topfzeit |
|---|---|---|---|
| A (diese Anmeldung) | Methylisobutylketon | 1,2 | 15 Tage |
| B (diese Anmeldung) | Methyl-tert.-butylketon | 1,2 | 17 Tage |
| I (DE-B 1 520 139) | Methylisobutylketon | 1,2 | 40 Stunden |
| J (DE-B 1 520 139) | Methyl-tert.-butylketon | 1,2 | 7 Wochen |

[1)] Äquivalentverhältnis von Isocyanatgruppen zu blockierten und freien Aminogruppen im Lack

**Patentansprüche**

1. Verfahren zur Herstellung von wasserhärtbaren, im wesentlichen Gemische (iii) und gegebenenfalls Harnstoffgruppen aufweisende Umsetzungsprodukte aus (i) und (ii) darstellenden, gegebenenfalls (iii) aus der Lacktechnologie bekannte Hilfs- und Zusatzmittel enthaltenden Kombinationen aus (i) organischen Polyisocyanaten und (ii) Polyaminen mit zumindest teilweise blockierten, als Ketimin vorliegenden Aminogruppen durch Vermischen der organischen Polyisocyanate (i) mit den blockierten Polyaminen (ii) und gegebenenfalls aus der Lacktechnologie bekannten Hilfsund Zusatzmitteln (iii) unter Einhaltung eines Äquivalentverhältnisses von Isocyanatgruppen zu blockierten und freien Aminogruppen von 0,9 : 1 bis 4 : 1 und Umsetzung der gegebenenfalls vorliegenden freien Aminogruppen mit einem Teil der Isocyanatgruppen des Polyisocyanats (i) unter Harnstoffbildung, dadurch gekennzeichnet, daß man als Polyamine (ii) mit zumindest teilweise blockierten Aminogruppen Gemische, bestehend aus

a) 50 bis 95 Aminäquivalentprozent an organischen Verbindungen, die frei von primären und sekundären Aminogruppen sind und mindestens zwei Ketimingruppen der Formel

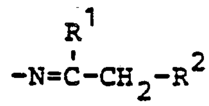

aufweisen, wobei $R^1$ für einen Alkyl- oder Cycloalkylrest und $R^2$ für Wasserstoff oder einen Alkyl- oder Cycloalkylrest steht, oder wobei $R^1$ und $R^2$ zusammen mit den beiden Kohlenstoffatomen der Ketimingruppe einen cycloaliphatischen Kohlenwasserstoffrest bilden,

b) 5 bis 40 Aminäquivalentprozent an organischen Verbindungen, die frei von primären und sekundären Aminogruppen sind und mindestens zwei Ketimingruppen aufweisen, von denen eine den Formeln

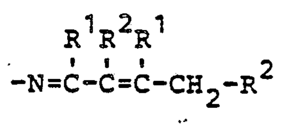

und/oder

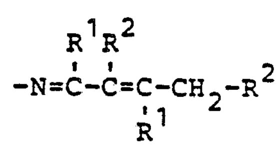

entspricht, wobei $R^1$ und $R^2$ die obengenannte Bedeutung haben, während die außerdem vorliegenden Ketimingruppe(n) der unter a) genannten Formel entsprechen,

c) 0 bis 15 Aminäquivalentprozent an organischen Verbindungen, die eine freie primäre oder sekundäre Aminogruppe und mindestens eine Ketimingruppe der unter a) genannten Formel aufweisen,

d) 0 bis 15 Aminäquivalentprozent an Ketimingruppen-freien organischen Verbindungen mit insgesamt mindestens zwei primären und/oder sekundären Aminogruppen und

e) 0 bis 5 Aminäquivalentprozent an anderen als den unter a) bis d) genannten organischen Verbindungen mit zumindest teilweise blockierten Aminogruppen,

wobei sich die genannten Prozentsätze zu 100 ergänzen, verwendet.

2) Verfahren gemäß Anspruch 1, dadurch gekennzeichnet, daß man als organische Polyisocyanate endständige Isocyanatgruppen aufweisende Prepolymere einer (mittleren) NCO-Funktionalität von 2 bis 4 und eines (mittleren), aus der Stöchiometrie der Ausgangsmaterialien errechenbaren Molekulargewichts von 1 000 bis 10 000 auf Basis von überschüssigen Mengen an urethangruppenfreien Polyisocyanaten und den aus der Polyurethanchemie bekannten Polyester- oder Polyetherpolyolen verwendet.

3) Verfahren gemäß Ansprüchen 1 und 2, dadurch gekennzeichnet, daß man als zumindest teilweise blockierte Polyamine Gemische der in Anspruch 1 genannten Art auf Basis von (i) cycloaliphatischen oder aliphatisch-cycloaliphatischen Diaminen des Molekulargewichtsbereichs 114-300 und (ii) Dialkyl-ketonen des Molekulargewichtsbereichs 58 bis 100 verwendet.

4) Gemäß Ansprüchen 1 bis 3 erhältliche, Gemische und gegebenenfalls Harnstoffgruppen aufweisende Umsetzungsprodukte darstellende, gegebenenfalls aus der Lacktechnologie bekannte Hilfs- und Zusatzmittel enthaltende Kombinationen aus organischen Polyisocyanaten und zumindest teilweise blockierten organischen Polyaminen.

5) Verwendung der gemäß Ansprüchen 1 bis 3 erhältlichen, Gemische und gegebenenfalls Harnstoffgruppen aufweisende Umsetzungsprodukte darstellenden und gegebenenfalls aus der Lacktechnologie bekannte Hilfs- und Zusatzmittel enthaltenden, Kombinationen aus organischen Polyisocyanaten und zumindest teilweise blockierten organischen Polyaminen als wasserhärtbare Lacke, Beschichtungs- oder Dichtungsmassen.

**Claims**

1. Process for the preparation of water hardenable combinations of (i) organic polyisocyanates and (ii) polyamines containing at least partially blocked amino groups present as ketimines, which combinations optionally contain (iii) auxiliary agents and additives known from lacquer technology, said

combinations consisting substantially of mixtures of (i) and (ii) and optionally urea group-containing reaction products of (i) and (ii), by mixing the organic polyisocyanates (i) with the blocked polyamines (ii) and optionally auxiliary agents and additives (iii) known from lacquer technology, using an equivalent ratio of isocyanate groups to blocked and free amino groups of from 0.9 : 1 to 4 : 1 and reacting the free amino groups optionally present with some of the isocyanate groups of the polyisocyanate (i) with urea formation, characterised in that the polyamines (ii) containing at least partially blocked amino groups used are mixtures consisting of

a) 50 to 95 amine equivalents percent of organic compounds which are free from primary and secondary amino groups and contain at least two ketimine groups corresponding to the formula

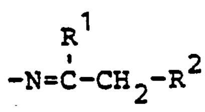

wherein $R^1$ stands for an alkyl or cycloalkyl group and $R^2$ stands for hydrogen or an alkyl or cycloalkyl group or $R^1$ and $R^2$ together with the two carbon atoms of the ketimine group form a cycloaliphatic hydrocarbon group,

b) 5 to 40 amine equivalents percent of organic compounds which are free from primary and secondary amino groups and contain at least two ketimine groups, one of which corresponds to the following formulae :

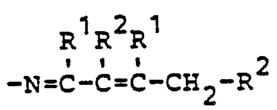 and / or 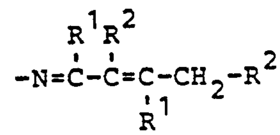

wherein $R^1$ and $R^2$ have the meanings indicated above while the other ketimine group(s) present correspond(s) to the formula shown under a),

c) 0 to 15 amine equivalents percent of organic compounds containing a free primary or secondary amino group and at least one ketimine group of the formula shown under a),

d) 0 to 15 amine equivalents percent of organic compounds which are free from ketimine groups and have a total of at least two primary and/or secondary amino groups, and

e) 0 to 5 amine equivalents percent of organic compounds containing at least partially blocked amino groups, which compounds are other than the organic compounds mentioned under a) to d), the above-mentioned percentages adding up to 100.

2. Process according to claim 1, characterised in that the organic polyisocyanates used are prepolymers containing isocyanate end groups and having an (average) isocyanate functionality of 2 to 4 and a (average) molecular weight of from 1 000 to 10 000, calculated from the stoichiometric proportions of the starting materials, based on excess quantities of polyisocyanates which are free from urethane groups and the polyester polyols or polyether polyols known from polyurethane chemistry.

3. Process according to claims 1 and 2, characterised in that the at least partially blocked polyamines used are mixtures of the type mentioned in claim 1 based on (i) cycloaliphatic or aliphatic-cycloaliphatic diamines in the molecular weight range of from 114 to 300 and (ii) dialkylketones in the molecular weight range of from 58 to 100.

4. Combinations obtainable according to claims 1 to 3 of organic polyisocyanates and at least partially blocked organic polyamines, which combinations optionally contain auxiliary agents and additives known from lacquer technology and constitute mixtures and optionally urea group-containing reaction products.

5. Use of the combinations obtainable according to claims 1 to 3 of organic polyisocyanates and at least partially blocked organic polyamines, which combinations constitute mixtures and optionally urea group-containing reaction products and optionally contain auxiliary agents and additives known in lacquer technology, as water-hardenable lacquers or coating or sealing compounds.

**Revendications**

1. Procédé de production de compositions durcissables par l'eau, constituant principalement des mélanges de (i) et (ii) et éventuellement de produits de réaction de (i) et (ii) portant des groupes urée, contenant le cas échéant des adjuvants et des additifs (iii) connus dans la technologie des peintures, constituées (i) de polyisocyanates organiques et (ii) de polyamines portant des groupes amino au moins partiellement bloqués, présents comme cétimine, par mélange des polyisocyanates organiques (i) avec les polyamines bloquées (ii) et le cas échéant d'adjuvants et d'additifs (iii) connus dans la technologie des

peintures, par le maintien d'un rapport d'équivalents des groupes isocyanato aux groupes amino bloqués et libres de 0,9 : 1 à 4 : 1 et réaction des groupes amino libres éventuellement présents avec une partie des groupes isocyanato du polyisocyanate (i) avec formation d'urée, caractérisé par le fait qu'on utilise comme polyamines (ii) portant des groupes amino au moins partiellement bloqués, des mélanges constitués :

a) de 50 à 95 % en équivalents d'amine, de composés organiques qui sont dépourvus de groupes amino primaires et secondaires et qui présentent au moins deux groupes cétimine

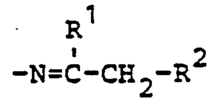

dans laquelle $R^1$ représente un reste alkyle ou cycloalkyle et $R^2$ représente l'hydrogène ou un reste alkyle ou cycloalkyle, ou bien $R^1$ et $R^2$ forment conjointement avec les deux atomes de carbone du groupe cétimine un reste d'hydrocarbure cycloaliphatique,

b) de 5 à 40 % en équivalents d'amines de composés organiques qui sont dépourvus de groupes amino primaires et secondaires et portent au moins deux groupes cétimine, dont l'un répond aux formules

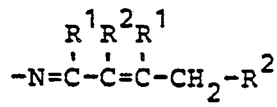 et/ou 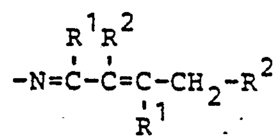

dans lesquelles $R^1$ et $R^2$ ont la définition indiquée ci-dessus, tandis que le ou les groupes cétimine qui sont en outre présents répondent à la formule mentionnée en a),

c) de 0 à 15 % en équivalents d'amine de composés organiques qui portent un groupe amino primaire ou secondaire libre et au moins un groupe cétimine de la formule mentionnée en a),

d) de 0 à 15 % en équivalents d'amine de composés organiques dépourvus de groupes cétimine avec au total au moins deux groupes amino primaires et/ou secondaires, et

e) de 0 à 5 % en équivalents d'amine d'autres composés organiques mentionnés en a) à d) portant des groupes amino au moins partiellement bloqués,

le total des pourcentages mentionnés étant égal à 100.

2. Procédé suivant la revendication 1, caractérisé en ce qu'on utilise comme polyisocyanates organiques des prépolymères porteurs de groupes isocyanato terminaux à fonctionnalité NCO (moyenne) de 2 à 4 et de poids moléculaire (moyen), calculable d'après la stoechiométrie des matières de départ, de 1 000 à 10 000, à base de quantités en excès de polyisocyanates dépourvus de groupes uréthanne et des polyester- ou polyétherpolyols connus dans la chimie des polyuréthannes.

3. Procédé suivant les revendications 1 et 2, caractérisé en ce qu'on utilise comme polyamines au moins partiellement bloquées des mélanges du type mentionné dans la revendication 1 à base (i) de diamines cycloaliphatiques ou aliphato-cycloaliphatiques de poids moléculaires compris dans l'intervalle de 114 à 300 et (ii) de dialkyl-cétones de poids moléculaires compris dans l'intervalle de 58 à 100.

4. Compositions obtenues suivant les revendications 1 à 3, constituant des mélanges et des produits de réaction portant éventuellement des groupes urée, contenant éventuellement des adjuvants et additifs connus dans la technologie des laques, constituées de polyisocyanates organiques et de polyamines organiques au moins partiellement bloquées.

5. Utilisation comme laques, compositions de revêtement et matières d'étanchéité durcissables par l'eau de compositions pouvant être obtenues selon les revendications 1 à 3, constituant des mélanges et des produits de réaction portant éventuellement des groupes urée et contenant éventuellement des adjuvants et additifs connus dans la technologie des laques, constituées de polyisocyanates organiques et de polyamines organiques au moins partiellement bloquées.